# EUROPEAN PATENT APPLICATION

(11) **EP 1 788 763 A1**
(43) Date of publication of application: **23.05.2007**
(21) Application number: 06021895.5
(22) Date of filing: 19.10.2006
(51) Int. Cl.: H04L 12/58, H04L 29/08

(54) **Implementation of instant messaging hunting groups**

(30) Priority: 18.11.2005 US 282914
(71) Applicant: Alcatel Lucent, 75008 Paris (FR)
(72) Inventor: Ozugur, Timucin, Fairview, TX 75069 (US); Jachner, Jack, Lexington, MA 02420 (US)
(74) Representative: Schäfer, Wolfgang

(57) **Abstract**

System and method for implementing hunting groups for instant messaging ("IM") are described. One embodiment is a method for implementing IM group hunting by an IM event server (IMES) The method comprises receiving a request from a first user to initiate an IM session with any one member of a group; responsive to the request, automatically determining a group member available for participating in an IM session with the first user; and establishing an IM session between the first user and the available group member. If not successful, the session initiation attempt is aborted, and another member from the group is selected. As an alternative to sequential attempting, parallel hunting may be used. Example applications include Call Centers and Help Desks.

## Description

### BACKGROUND OF THE INVENTION

### Technical Field of the Invention

The present invention generally relates to instant messaging ("IM") services. More particularly, and not by way of any limitation, the present invention is directed to system and method for implementation of hunting groups in connection with IM services.

### Description of Related Art

Private branch exchanges ("PBXes") and Class 5 switches currently support a wide variety of call features, one of which is a "hunting group" feature. Via the hunting group feature, a group of telephone lines associated with PBX extensions are combined into a "hunting group" by virtue of the fact that they share a common functionality (e.g., customer service or information technology ("IT")) or the fact that they are associated with a single person (e.g., when a single person has multiple telephone numbers).

The purpose of the hunting group feature is to forward a call directed to the hunting group to an idle line of the group. Scheduling of calls for implementing the hunting group feature can be performed in a variety of manners. In particular, current PBX/Class 5 servers allow for rotary (or rotational), sequential, and/or broadcast scheduling of calls. In rotary scheduling, the PBX attempts to connect to a terminal associated with each of the lines of the hunting group one line at a time until an idle (i.e., non-busy) terminal is located. If all of the lines have been tried and an idle terminal has not been found, the procedure can be repeated until an idle terminal is located. Alternatively, the call may be forwarded to a voice mailbox. In rotary scheduling, there is no specified order in which lines are tried.

In sequential scheduling, the PBX attempts to connect to a terminal associated with each of the lines of the hunting group sequentially (i.e., one line at a time) based on a prioritized list of lines/PBX extensions until an idle terminal is located. If all of the lines have been tried and an idle terminal has not been found, the procedure can be repeated until an idle terminal is located. Alternatively, the call may be forwarded to a voice mailbox.

In broadcast scheduling, the PBX rings all of the terminals associated with the hunting group lines simultaneously. The call is directed to the first idle terminal that is answered. If none of the terminals is idle, the call is put in a waiting queue, where it remains until a terminal is free to receive the call. At that point, the PBX redirects the call to the idle terminal.

The hunting group feature enables advanced call processing for ascending, descending, rotary, sequential, and parallel (i.e., broadcast) group hunting. A PBX administrator can define multiple endpoints and/or PBX extensions that participate in a hunting group.

It will be recognized that there will arise situations in which a person may desire to reach any member of an enterprise group, such as customer service or IT. For example, the person may want to share an application with or transfer a document to any member of the group. Currently, this situation is handled by the person manually attempting to IM each member of the group one by one until someone answers the IM. This, of course, presupposes that the person knows the identity and uniform resource identifier ("URI") of every member of the enterprise group he or she is trying to IM, which is not always the case. As previously indicated, in the PBX context, this situation is handled using hunting groups, whereby the extensions of members of an enterprise group, such as customer service or IT, are combined into a hunting group, with calls to the hunting group being handled as described above.

Therefore, what is needed is a method and system for implementing a hunting group feature in connection with IM services.

### SUMMARY OF THE INVENTION

One embodiment is a method for implementing instant messaging ("IM") group hunting by an IM event server (IMES). The method comprises receiving a request from a first user to initiate an IM session with any one member of a group; responsive to the request, automatically determining a group member available for participating in an IM session with the first user; and establishing an IM session between the first user and the available group member.

Another embodiment is a system for implementing IM group hunting by an IM event server (IMES). The system comprises means for receiving a request from a first user to initiate an IM session with any one member of a group; means responsive to the request for automatically determining a group member available for participating in an IM session with the first user; and means for establishing an IM session between the first user and the available group member.

Another embodiment is a computer-readable medium operable with a computer for implementing IM group hunting by an IM event server (IMES), the medium having stored thereon instructions executable by the computer for receiving a request from a first user to initiate an IM session with any one member of a group; instructions executable by the computer responsive to the request for automatically determining a group member available for participating in an IM session with the first user; and means for establishing an IM session between the first user and the available group member.

### BRIEF DESCRIPTION OF THE DRAWINGS

A more complete understanding of the present invention may be had by reference to the following Detailed Description when taken in conjunction with the accompanying drawings wherein:

FIG. 1 is a block diagram of one embodiment of a system for implementing IM hunting groups;

FIG. 2 is a flowchart of one embodiment of a method for implementing series IM group hunting; and

FIG. 3 is a flowchart of one embodiment of a method for implementing parallel IM group hunting.

### DETAILED DESCRIPTION OF THE DRAWINGS

Embodiments of the invention will now be described with reference to various examples of how the invention can best be made and used. Like reference numerals are used throughout the description and several views of the drawings to indicate like or corresponding parts, wherein the various elements are not necessarily drawn to scale.

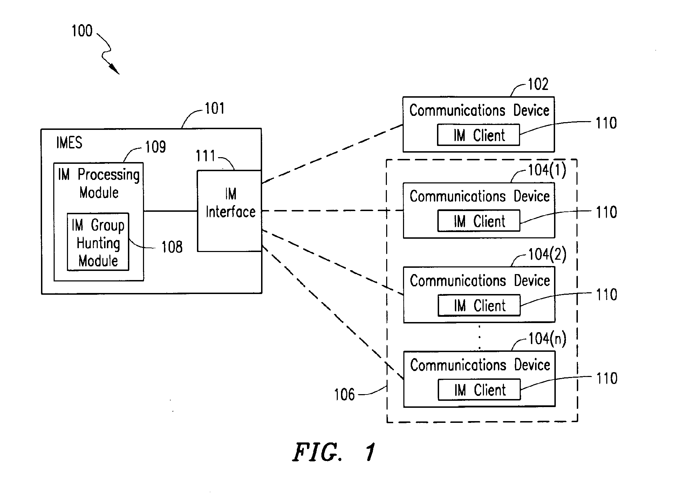

Referring now to the drawings, and more particularly to FIG. 1, illustrated therein is a block diagram of a system 100 comprising an IM event server ("IMES") 101 for implementing group hunting in accordance with one embodiment. In one embodiment, as illustrated in FIG. 1, when a user using a communications device 102 attempts to establish an IM session with any one of a plurality of communications devices 104(1)-104(n) comprising a hunting group 106, the IMES 101 initiates an IM hunting group module 108 that resides within an IM processing module 109 of the IMES 101. The devices 102, 104(1)-104(n) may comprise any number of different types of wired and wireless communications devices including, but not limited to, mobile phones, PDAs, personal computer systems, and the like.

It will be recognized that all of the communications devices 104(1)-104(n) may belong to a single person (analogous to the case in the PBX context in which a single person is reachable via multiple extensions) or may each be controlled by a different person. In either case, the term "hunting group" is deemed to refer to all of the devices within a defined group (such as the group 106) and alternatively to all of the persons to whom the devices of the group belong. It will also be recognized that each of the devices 102, 104(1)-104(n), are associated with a unique URI for identifying the device to the IMES 101. As illustrated in FIG. 1, the devices 102, 104(1)-104(n) each have installed thereon IM client software 110, which communicates with an IM interface 111 of the IMES 101 via respective wired or wireless connections. It will be recognized that, in place of IM client software 110, the devices 102, 104(1)-104(n) may alternatively communicate with the IM interface 111 via IM via web browser, Extensible Markup Language ("XML")-based medium, or any text medium that enables the user to send and receive IMs. As used herein "IM client software 110" will be understood to encompass any mechanism for communicating with the IM interface 111 to enable the user to send and receive IMs. The IM interface 111 interfaces the IM client software 105 with the IM processing module 109 and, in particular, the IM hunting group module 108.

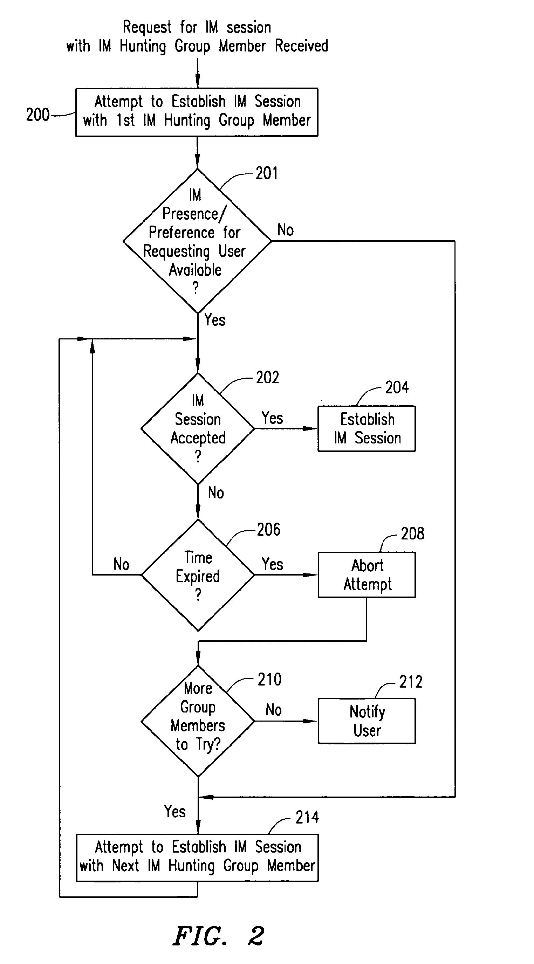

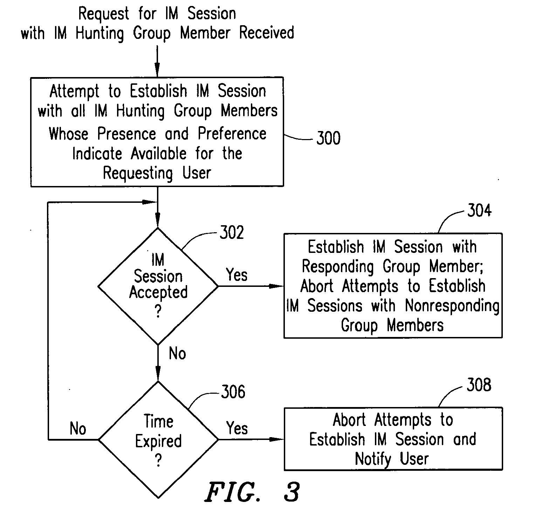

As will be described in greater detail below with reference to FIGs. 2 and 3, the IM hunting group module 108 attempts to establish an IM session with each device 104(1)-104(n) of the group 106, either sequentially or simultaneously, until communication with at least one of the devices 104(1)-104(n) succeeds; that is, until one of the devices is used to respond to the IM. As previously noted, IM group hunting can be realized in any manner in which PBX group hunting can be realized, including sequential, parallel, rotary, and others.

In the case of serial IM group hunting, the IM hunting group module 108 attempts to establish an IM session with a first member of the group, such as via the device 104(1). If the group member does not respond to the attempt within a certain period of time, the IMES 101 terminates the attempt, resulting in the IM session window being removed from the screen of the communications device 104(1). At that point, the IMES 101 attempts to establish an IM session with a second member of the group, such as via the device 104(2). This process is repeated, with each device being attempted one at a time, until a member of the group responds to the attempt or an attempt has been made with respect to every member of the group.

It will be recognized that, in one embodiment, only one attempt is made with respect to each member. In another embodiment, the members are sequentially attempted until a member responds to the IM attempt, which may result in members being attempted more than once. Additionally, the group members may be attempted in a preestablished order of priority, as is the case with true sequential group hunting, or in no particular order, as is the case with rotary group hunting.

FIG. 2 is a flowchart of the operation of the hunting group function 108 the IMES 101 for implementing serial IM hunting in accordance with one embodiment. In step 200, in response to receipt by the IMES of a request for an IM session with any member of an IM hunting group, the IM hunting group module 108 of the IMES 101 attempts to establish an IM session with a first member of the IM hunting group. In step 201, a decision is made the IM hunting group member's presence and preference is "Available" for the requesting user. In particular, an IM is only sent to users who are reachable by IM and whose current presence and preference for communication by IM with the requesting user is Available. If a positive determination is made in step 201, execution proceeds to step 202, in which a determination is made whether the IM session has been accepted. Specifically, a determination is made whether a response has been received from the first group member. If so, in step 204, the IM session is successfully established and proceeds as normal; otherwise, in step 206, a determination is made whether a predetermined time period in which the group member must respond has expired. If the time period has not expired, execution returns to step 202; otherwise, execution proceeds to step 208.

In step 208, in response to expiration of the predetermined time period without response from the group member, the attempt to establish an IM session is aborted and the IM session window is removed from the group member's screen (or more accurately, from the screen of his or her communications device). Execution then proceeds to step 210. In step 210, a determination is made whether there are more group members to try. It will be recognized that in an embodiment in which each group member is tried, or "pinged", only a certain number of times, a negative determination in step 210 will result after all of the group members have been pinged that number of times with no response. In contrast, in an embodiment in which the group members are pinged sequentially until one of the group members responds, the inquiry posed in step 210 will never result in a negative response.

In response to a negative determination in step 210, execution proceeds to step 212, in which the IM session is terminated and the user is notified of the failure to successfully establish IM communications with a group member. In response to a positive determination in step 210, or in response to a negative determination in step 201, execution proceeds to step 214, in which the IM hunting group module 108 of the IMES 101 establishes an IM session with the next group member. Execution then returns to step 202.

In the case of parallel IM hunting, the IMES 101 broadcasts the IM session to every device 104(1)-104(n) of the IM hunting group 106 simultaneously. The group member who responds first to the IM session will keep the session. As soon as a group member responds to the IM session, the attempts to establish IM sessions with the other devices will be terminated and the IM session window will disappear from their respective screens.

FIG. 3 is a flowchart of the operation of the IMES 101 for implementing parallel IM hunting in accordance with one embodiment. In step 300, in response to receipt by the IMES of a request to establish an IM session with a member of an IM hunting group, the IM hunting group module 108 of the IMES 101 broadcasts an IM session to all members of the IM hunting group whose IM presence and preference indicates Available for the requesting user simultaneously in an attempt to establish an IM session with one of those group members. In step 302, a determination is made whether a response has been received from the any member of the group. If so, in step 304, an IM session is established with the responding group member and the attempts to establish IM sessions with the remaining group members are terminated. If a negative determination is made in step 302, in step 306, a determination is made whether a predetermined time period in which a group member must respond has expired. If the time period has not expired, execution returns to step 302; otherwise, execution proceeds to step 308.

In step 308, in response to expiration of the predetermined time period without response from a group member being received, the attempts to establish an IM session with one of the group members are aborted and the user is notified of the failure to successfully establish an IM session with any of the group members.

It will be recognized that in certain situations, it will be preferable to implement the above-described method without inclusion of step 306; that is, without regard to the amount of time it takes a group member to respond to the IM from the user. In this situation, the IM session window will remain on the screens of the group members until one of them ultimately responds, regardless of how long it takes them to respond.

The IM hunting group feature described herein can be beneficially applied in a number of different scenarios in which exchanging an IM or sharing a file or application facilitates communication between the parties. The following is a list, by no means exhaustive, of examples of such scenarios.

Customer Call Center PBX/Class 5 call hunting is routinely deployed in customer service departments where in which a call from a customer to a company call center (e.g., customer service) is routed to the first available representative. It is conceivable that a customer who has IM capability may prefer to communicate with the representative via IM. For example, it may be helpful for the customer to provide to the representative an image of broken machinery that the customer recently purchased from the company. Using the IM session established as a result of the IM hunting feature described herein, the customer can do exactly that.

Company-Wide Communications In certain situations, a company employee may need to obtain the answer to a question on a specific topic. Using the parallel IM hunting feature, the employee can post a question to an IM hunting group that includes every employee of the company. The first group member to respond to the IM session will capture the session, at which point the IM session windows will be removed from the screens of the remaining group members. In this scenario, it is conceivable that different usage policies may need to be deployed to thwart misuse. For example, the company may allow users to post questions via the parallel IM hunting feature only to IM hunting groups comprised of lower-ranking employees.

Specialized Groups An employee may find it useful to communicate with a specialized group, such as a company help desk, concerning a problem via IM rather than telephone or email. In this situation, the employee will initiate an IM hunting group request to the IM server to reach an available help desk agent. The help desk agent can then assist and share documents or files with the employee immediately via IM to more quickly resolve the problem experienced by the employee. Additionally, customer call center agents may use an IM hunting group to communicate with a group of knowledge workers that share a special skill, such as engineering, to more quickly resolve a customer care issue for a customer who has called the customer call center.

An advantage of the embodiments described herein is that it enables the establishment of a separate channel (i.e., an IM channel) with an available person. Moreover, it can be used to compliment the PBX/Class 5 hunting group feature. Another advantage is that it enables a person to reach an available agent via IM without knowing his or her IM address, thus providing the person with many capabilities, including application sharing, file transfer, and video sharing.

The following features, separately or in any combination, may also constitute advantageous embodiments of the described or claimed invention:
- The claimed and/or described method, wherein the automatically determining a group member available for participating in an IM session with the first user comprises: attempting to establish an IM session with each member of the group simultaneously; and responsive to a first member of the group accepting the IM session, terminating the attempting with respect to remaining members of the group.
- The claimed and/or described method wherein the automatically determining further comprises, responsive to a first member of the group accepting the IM session, establishing the IM session between the first group member and the first user.
- The claimed and/or described method further comprising, responsive to the IM session not being accepted by any member of the group within a predetermined time period, aborting the attempting with respect to all members of the group.
- The claimed and/or described system wherein the means for automatically determining a group member available for participating in an IM session with the first user comprises: means for attempting to establish an IM session with a first member of the group; and means responsive to passage of a predetermined time period without acceptance by the first group member of the first IM session in response to the attempting for aborting the attempting to establish an IM session with the first group member and automatically attempting to establish an IM session with another member of the group until an IM session is accepted by a member of the group.
- The claimed and/or described system of claim 10 wherein the means for automatically determining a group member available for participating in an IM session with the first user comprises: means for attempting to establish an IM session with each member of the group simultaneously; and means responsive to a first member of the group accepting the IM session for terminating the attempting with respect to remaining members of the group.
- The claimed and/or described system wherein the means for automatically determining further comprises means responsive to a first member of the group accepting the IM session for establishing the IM session between the first group member and the first user.
- The claimed and/or described system further comprising means responsive to the IM session not being accepted by any member of the group within a predetermined time period for aborting the attempting with respect to all members of the group.
- The claimed and/or described computer-readable medium wherein the instructions executable by the computer for automatically determining a group member available for participating in an IM session with the first user further comprise: instructions executable by the computer for attempting to establish an IM session with a first member of the group; and instructions executable by the computer responsive to the IM session not being accepted by the first group member in response to the attempting for automatically attempting to establish an IM session with another member of the group until an IM session is accepted by a member of the group.
- The claimed and/or described computer-readable medium wherein the instructions executable by the computer for automatically determining further comprise instructions executable by the computer responsive to the IM session not being accepted by the first group member in response to the attempting for aborting the attempting to establish an IM session with the first group member.
- The claimed and/or described computer-readable medium wherein the instructions executable by the computer for automatically determining further comprise instructions executable by the computer responsive to the IM session being accepted by the first group member in response to the attempting for establishing the IM session between the first group member and the first user.
- The claimed and/or described computer-readable medium further comprising instructions executable by the computer responsive to the IM session not being accepted by any member of the group for aborting the attempting with respect to all members of the group.
- The claimed and/or described computer-readable medium wherein the instructions executable by the computer for automatically determining a group member available for participating in an IM session with the first user comprise: instructions executable by the computer for attempting to establish an IM session with a first member of the group; and instructions executable by the computer responsive to passage of a predetermined time period without acceptance by the first group member of the first IM session in response to the attempting for aborting the attempting to establish an IM session with the first group member and automatically attempting to establish an IM session with another member of the group until an IM session is accepted by a member of the group.
- The claimed and/or described computer-readable medium wherein the instructions executable by the computer for automatically determining a group member available for participating in an IM session with the first user comprise: instructions executable by the computer for attempting to establish an IM session with each member of the group simultaneously; and instructions executable by the computer responsive to a first member of the group accepting the IM session for terminating the attempting with respect to remaining members of the group.
- The claimed and/or described computer-readable medium wherein the instructions executable by the computer for automatically determining further comprise instructions executable by the computer responsive to a first member of the group accepting the IM session for establishing the IM session between the first group member and the first user.
- The claimed and/or described computer-readable medium further comprising instructions executable by the computer responsive to the IM session not being accepted by any member of the group within a predetermined time period for aborting the attempting with respect to all members of the group. It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method for implementing instant messaging ("IM") group hunting by an IM event server (IMES), the method comprising:
receiving a request from a first user to initiate an IM session with any one member of a group;
responsive to the request, automatically determining a group member available for participating in an IM session with the first user; and
establishing an IM session between the first user and the available group member.

2. The method of claim 1 wherein the automatically determining a group member available for participating in an IM session with the first user comprises:
attempting to establish an IM session with a first member of the group; and
responsive to the IM session not being accepted by the first group member in response to the attempting, automatically attempting to establish an IM session with another member of the group until an IM session is accepted by a member of the group.

3. The method of claim 2 wherein the automatically determining further comprises, responsive to the IM session not being accepted by the first group member in response to the attempting, aborting the attempting to establish an IM session with the first group member.

4. The method of claim 2 wherein the automatically determining further comprises, responsive to the IM session being accepted by the first group member in response to the attempting, establishing the IM session between the first group member and the first user.

5. The method of claim 2 further comprising, responsive to the IM session not being accepted by any member of the group, aborting the attempting with respect to all members of the group.

6. The method of claim 1 wherein the automatically determining a group member available for participating in an IM session with the first user comprises:
attempting to establish an IM session with a first member of the group; and
responsive to passage of a predetermined time period without acceptance by the first group member of the first IM session in response to the attempting:
aborting the attempting to establish an IM session with the first group member; and
automatically attempting to establish an IM session with another member of the group until an IM session is accepted by a member of the group.

7. A system for implementing instant messaging ("IM") group hunting by an IM event server (IMES), the system comprising:
means for receiving a request from a first user to initiate an IM session with any one member of a group;
means responsive to the request for automatically determining a group member available for participating in an IM session with the first user; and
means for establishing an IM session between the first user and the available group member.

8. The system of claim 7 wherein the means for automatically determining a group member available for participating in an IM session with the first user comprises:
means for attempting to establish an IM session with a first member of the group; and
means responsive to the IM session not being accepted by the first group member in response to the attempting for automatically attempting to establish an IM session with another member of the group until an IM session is accepted by a member of the group.

9. The system of claim 7 wherein the means for automatically determining further comprises means responsive to the IM session not being accepted by the first group member in response to the attempting for aborting the attempting to establish an IM session with the first group member.

10. The system of claim 7 wherein the means for automatically determining further comprises means responsive to the IM session being accepted by the first group member in response to the attempting for establishing the IM session between the first group member and the first user.

11. The system of claim 7 further comprising means responsive to the IM session not being accepted by any member of the group for aborting the attempting with respect to all members of the group.

12. A computer-readable medium operable with a computer for implementing instant messaging ("IM") group hunting by an IM event server (IMES), the medium having stored thereon:
instructions executable by the computer responsive to receipt of a request from a first user to initiate an IM session with any one member of a group for automatically determining a group member available for participating in an IM session with the first user; and
instructions executable by the computer for establishing an IM session between the first user and the available group member.
